Europäisches Patentamt

European Patent Office

Office européen des brevets

(19)

(11) Publication number: **0 302 198**
**A2**

# EUROPEAN PATENT APPLICATION

(21) Application number: **88109113.6**

(22) Date of filing: **08.06.88**

(51) Int. Cl.⁴: **B62J 1/26**

The title of the invention has been amended (Guidelines for Examination in the EPO, A-III, 7.3).

(30) Priority: **10.06.87 IT 8363487**

(43) Date of publication of application:
**08.02.89 Bulletin 89/06**

(84) Designated Contracting States:
**ES**

(71) Applicant: **Fugazzi, Fortunato**
**Via De Gasperi 10**
**I - 22076 Mozzate ( Como )(IT)**

(72) Inventor: **Fugazzi, Fortunato**
**Via De Gasperi 10**
**I-22076 Mozzate Como(IT)**
Inventor: **Fugazzi, Ferruccio**
**Via De Gasperi 10**
**I-22076 Mozzate Como(IT)**

(74) Representative: **Sassi, Romano**
**UFFICIO BREVETTI VARESINO Viale Belforte**
**89**
**I-21100 Varese(IT)**

(54) **Saddle, particularly for bicycles.**

(57) A saddle, particularly for bicycles, wherein, between its cover (3) and its hull (1), at least a fluid-tight bladder (2) is provided, whose elasticity and deformability are controllable, by varying the pressure of fluid filled therein, through a push-pull valve (20) or the like. The fluid-tight bladder (2) whose elasticity and deformability are controllable, is unfastened. The fluid-tight bladder (2), may comprise a plurality of bladder members, particularly arranged longitudinally. The filling fluid is gaseous and the push-pull valve (20) is of the kind engageable by a bicycle pump. A preferred embodiment of fluid-tight bladder (2), comprises a material of the kind described and claimed in PCT Application No. EP88/0199 (Canadian application No. 561/668) filed on March 16, 1988 of same applicant entitled: "Process of making of three-dimensional bodies and shapes, substantially hollow, whose deformability and elasticity is controllable as a function of quantity and quality of at least a fluid present in at least one of its internal hollows and bodies and shapes obtained with such process".

**FIG. 3**

**"Saddle, particularly for bicycles, wherein between its cover and its hull, at least a fluid-tight bladder is provided, whose elasticity and deformability are controllable, by varying the pressure of fluid filled therein, through a push-pull valve or the like."**

The present invention relates to a saddle, particularly for bicycles, wherein, between its cover and its hull or support, is provided at least a fluid-tight bladder, whose elasticity and deformability are controllable, by varying the pressure of fluid filled therein, through a push-pull valve or the like.

In the present state of the art, each saddle, particularly for bicycles, comprises, between its cover and its hull or support, a soft padding, generally stuck thereto and to the outer cover. Since the characteristics of potential practitioners of bicycles cannot be foreseen, the thickness of such padding material was planned on the base of an average practitioner, weighing about 70 Kg, as well as provided with a normally shaped and sized body. Any disagreement from these normal or foreseen conditions, resulted in a rapid process of padding impoverishing in its attitude to harmonize the shocks which starting from the bottom of the bicycle, are transmitted, upwardly affecting the rider's body, particularly through the saddle which is the critical point of contact, between bicycle and its user. In fact, this is the point where mainly the rider body impinges on the saddle and in addition is also a physiologically critical part of the body itself. Even the physiologic aspects are different e.g. between man and woman riders, wherein even the challenge between bicycle for man and bicycle for woman, is without meaning since both now wear trousers and can ride either seats. The saddles of the present state of the art, are intended to repeat the characteristics of those, in a single piece, made of leather, which are optimal, even nowadays, from several points of view: that of elasticity and deformability, as well as of transpiration. In these saddles, the leather member was stretched between the forward and rear poles, of the saddle frame, in order to react to the stresses of the rider body, maximizing the contact points, thus minimizing the specific pressure. This had an effective and stimulating function of massage which favour the formation and development of muscles, mutually responding to the reciprocal solicitations in an harmonious stimulus of all the physiological functions, tending to a perfect matching saddle-rider. However, the soft padding of these saddles of the present state of the art, instead of providing a maximization of mutual surface of contact, unduly, increased, the specific pressure of contact, at the emerging bones, that penetrate, with shocking effect, the saddle padding and the rider muscles, compressing delicate parts thereof such as, the prostate, the ureter tubes and the like. On the other hand, either saddles amortized only a part of vertical stresses and transmitted completely the horizontal vibrations.

The invention as claimed is intended to remedy these drawbacks. The inventor, with ingenious perception has conceived a saddle, particularly for bicycles, wherein, between its cover and its hull, at least una fluid-tight bladder is provided, whose elasticity and deformability are controllable, by varying the pressure of fluid filled therein, through a push-pull valve or the like.

According to a preferred embodiment of the present invention, the fluid-tight bladder, is comprised with a plurality' of bladder members, particularly arranged in longitudinal direction and the filling fluid is a gaseous means, while the push-pull valve is engageable with a bicycle pump.

Such preferred embodiment of the present invention attains its utmost perfection when, for providing the fluid-tight bladder, is used a material of the kind described and claimed in PCT Patent Application No. EP88/0199 (Canadian application No. 561,668) filed on March 16, 1988 entitled: "Process of making of three-dimensional bodies and shapes, substantially hollow, whose deformability and elasticity is controllable as a function of quantity and quality of at least a fluid present in at least one of its internal hollows and bodies and shapes obtained with such process".

In accordance with the present invention, the hull or support, any fluid-tight bladder and the cover are comprised by three members, which are assembleable but independent, whereby the characteristics of each of them may be harmonized with the need of practitioner or service.

Thus, it is self explaining as the saddles, according to the present invention, even if not stretched between the poles, respond to the stress of the user body, maximizing the reciprocal points of contact, in order to minimize the specific pressure therebetween. This provides an effective massage, which favours the formation and development of muscles, mutually responding to reciprocal stress. On the other hand, 1a saddle according to the present invention amortizes either vertical and horizontal vibrations. The three members of the saddle, according to the present invention, are optionally interchangeable by the bicycle practitioner. It will be appreciated that the cover may be easily and quickly removed and applied. Such cover removal releases also the bladder which correspondingly may be interchanged too.

One way of carrying out the invention is described in detail below with reference to drawings which illustrate two specific embodiments, in which:

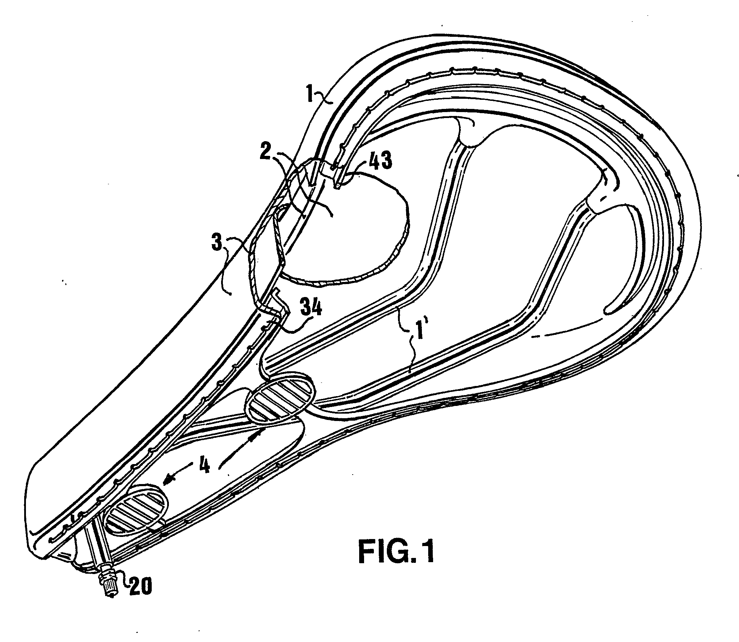

Figure 1 is a perspective view of a saddle, according to the present invention.

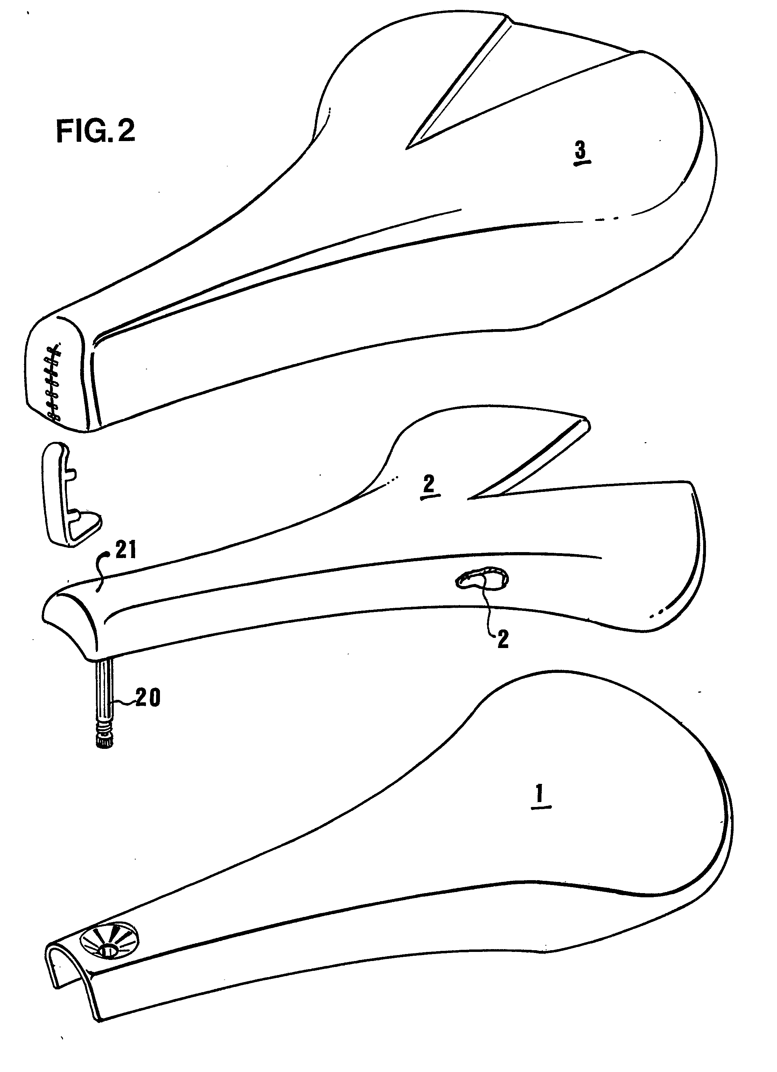

Figure 2 is a perspective view of a saddle, according to the present invention, as seen from one side slightly thereabove.

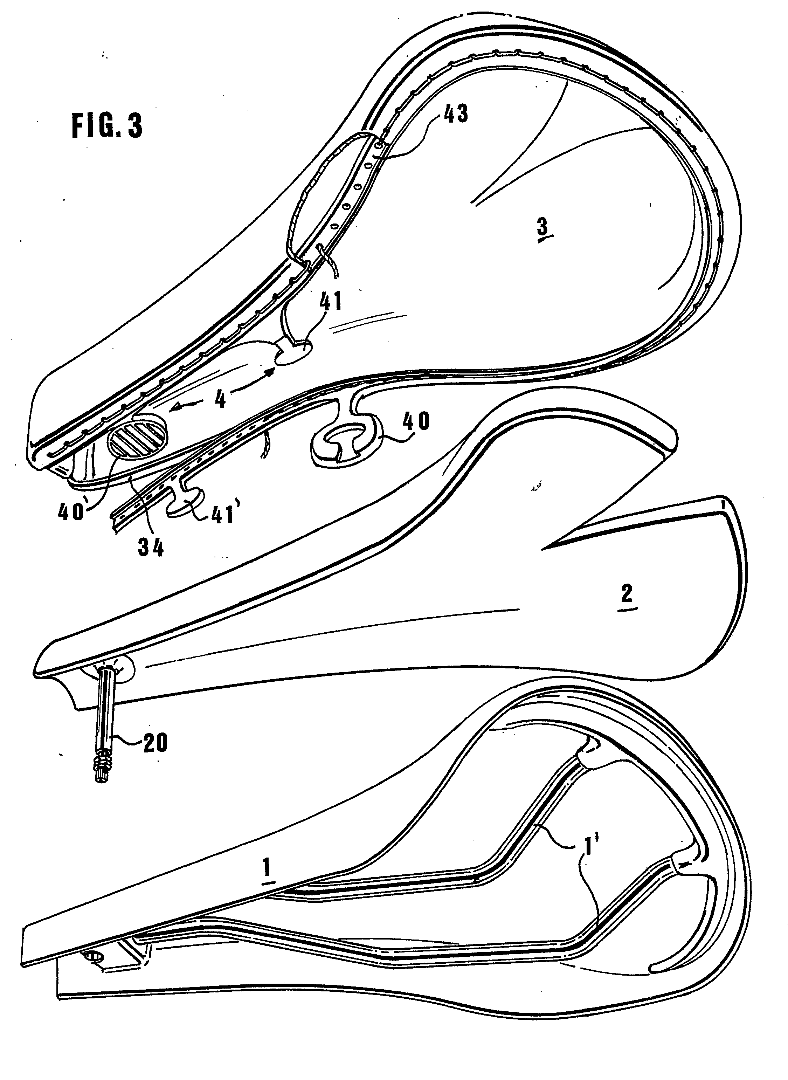

Figure 3 is a perspective view of a saddle, according to the present invention as seen from one side slightly thereunder. Some parts of the saddle cover and its rim have been broken to show their mutual characteristics.

Referring now to the figures of the drawings, a saddle, particularly for bicycles, comprises, a hull or support 1, with springs 1', a soft padding 2 and an outer cover 3. Conventionally, the padding 2, made of foamed material, not shown, is fastened by sticking it to the hull 1 and to the cover 3, in a fashion not shown, and the cover 3, in turn, is stuck, in a fashion not shown, to the hull 1.

In accordance to the present invention, the soft padding 2 is comprised by at least a fluid-tight bladder 2, to be filled with a gaseous and/or liquid fluid, includes a bag 2' which can be filled in through a push-pull valve 20, connected to the bottom of the pointed end thereof.

Moreover, according to the present invention, the cover 3 envelopes therein the bottom section of the saddle hull 1 and its springs 1' and is hereunder fixed, with a quick fastening 4. The quick fastening 4 comprises a rim 43, which is sawn to the bottom inner edge 34 of cover 3. Such a rim 43 is provided with two pairs of interengaging coupling members 40, 41; 40', 41' in the form of snap fasteners. To assemble the saddle members 1, 2, 3, the fluid-tight bladder 2 is maintained substantially empty or collapsed, while the cover 3 is being applied. Thereafter, the bladder 2 is filled with gaseous fluid, generally with air, through the valve 20. This confers stability and firmness to the mounted saddle. Thus a higher responsivity with respect to a conventional saddle is provided, particularly when horizontal and vertical shocks are to be absorbed and amortized.

According to a preferred embodiment of the present invention the fluid-tight bladder 2 is comprised by a plurality of bladder members, not shown, particularly arranged in a longitudinal direction and connected to the same push-pull valve 20. Particularly suitable to this end is a fluid-tight bladder 2 made of material of the kind described and claimed in PCT Patent Application No. EP88/0199 (Canadian application No. 561/668) filed on March 16, 1988, entitled: "Process of making of three-dimensional bodies and shapes, substantially hollow, whose deformability and elasticity is controllable as a function of quantity and quality of at least a fluid present in at least one of its internal hollows and bodies and shapes obtained with such process".

## Claims

1. Saddle, particularly for bicycles, characterized in that, between its cover (3) and its hull (1), is provided with at least a fluid-tight bladder (2), whose elasticity and deformability are controllable, by varying the pressure of fluid filled therein, through a push-pull valve (20) or the like.

2. Saddle, particularly for bicycles, as claimed in claim 1, characterized in that the fluid-tight bladder (2) whose elasticity and deformability are controllable, is provided free

3. Saddle, particularly for bicycles, as claimed in claims 1 e 2, characterized in that the fluid-tight bladder (2), is comprised by a plurality of bladder members, particularly arranged longitudinally.

4. Saddle, particularly for bicycles, as claimed in claims 1 to 3, characterized in that the filling fluid is a gaseous means, while the push-pull valve (20) is of the kind engageable by a bicycle pump.

5. Saddle, particularly for bicycles, as claimed in preceding claims, characterized in that the fluid-tight bladder (2), is made with a material of the kind described and claimed in PCT Application No. EP88/0199 (Canadian application No. 561,668) filed on March 16, 1988 of same applicant entitled: "Process of making of three-dimensional bodies and shapes, substantially hollow, whose deformability and elasticity is controllable as a function of quantity and quality of at least a fluid present in at least one of its internal hollows and bodies and shapes obtained with such process".

6. Saddle, particularly for bicycles, as claimed in preceding claims, characterized in that the hull or support (1), the fluid-tight bladder (2) however realized and the cover (3) comprise three members, which are assembleable but independent, whereby the characteristics of each of them may be harmonized with the need of practitioner or service.

7. Saddle, particularly for bicycles, as claimed in preceding claims, characterized in that the cover (3) is provided with a quick fastening (4).

8. Saddle, particularly for bicycles, as claimed in claim 7, characterized in that the cover quick fastening (4) comprises a rim (43), which is sawn to the bottom inner edge (34) of the cover (3), such a rim being provided with two pairs of interengaging coupling members (40, 41; 40', 41') in the form of snap fasteners.

FIG.1

FIG.2

3

2

21

2

20

1

EP 0 302 198 A2

FIG. 3

43

3

41

4

40

40'

41'

34

2

20

1

1'